Europäisches Patentamt

European Patent Office

Office européen des brevets

(19)

(11) Veröffentlichungsnummer : **0 176 837 B1**

(12) **EUROPÄISCHE PATENTSCHRIFT**

(45) Veröffentlichungstag der Patentschrift :
04.05.88

(51) Int. Cl.⁴ : **G 01 M 19/00**

(21) Anmeldenummer : 85111614.5

(22) Anmeldetag : 13.09.85

(54) Verfahren zur Qualitätskontrolle von Faltenbälgen sowie zugehörige Vorrichtung.

(30) Priorität : 27.09.84 DE 3435496

(43) Veröffentlichungstag der Anmeldung :
09.04.86 Patentblatt 86/15

(45) Bekanntmachung des Hinweises auf die Patenterteilung : 04.05.88 Patentblatt 88/18

(84) Benannte Vertragsstaaten :
DE FR SE

(56) Entgegenhaltungen :
FR-A- 1 306 024
SOVIET INVENTION ILLUSTRATED DERWENT, Woche K45, Offenlegung 21. Dezember 1983, London, GB; & SU - A - 991 204 (ZHIBAREVAIN) 23-01-1983

(73) Patentinhaber : Siemens Aktiengesellschaft Berlin und München
Wittelsbacherplatz 2
D-8000 München 2 (DE)

(72) Erfinder : Richter, Martin
Schulstrasse 20
D-8525 Marloffstein (DE)
Erfinder : Besslein, Bernd, Dr.
Mayr-Nusser-Weg 14
D-8520 Erlangen (DE)
Erfinder : Scholz, Dietrich
Adlerstrasse 7
D-8551 Hausen (DE)

EP 0 176 837 B1

## Beschreibung

Die Erfindung bezieht sich auf ein Verfahren zur Qualitätskontrolle von Faltenbälgen, welche aus einer Vielzahl von einzelnen Wellen und beidseitig je einem zylindrischen, lötbaren Ansatzstück bestehen. Daneben bezieht sich die Erfindung auch auf die zugehörige Vorrichtung zur Durchführung des Verfahrens.

Elastische Faltenbälge werden für verschiedene Anwendungen benötigt. Beispielsweise sind in Vakuumschaltröhren V2a-Faltenbälge eingesetzt, um zum Einschalten bzw. Ausschalten die Kontakte unter Vakuum betätigen zu können. Derartige Faltenbälge müssen daher auch über längere Zeiträume vakuumdicht sein. Rißfehler in den Faltenbälgen beeinträchtigen die Vakuumdichtigkeit, so daß sie als eine mögliche Ausfallursache für Vakuumschaltröhren in Frage kommen, und müssen daher ausgeschlossen werden.

Der Nachweis von Rißfehlern kann bisher nur zerstörend durch mechanische Dauerschaltungen und mittels metallographischer Schliffbildmethoden durchgeführt werden. Hierzu müssen üblicherweise aus den als Halbzeug für die Herstellung von Vakuumschaltröhren ausgelieferten Faltenbälgen Stichproben genommen werden.

Es wäre wünschenswert, Faltenbälge zerstörungsfrei prüfen zu können. Aufgabe der Erfindung ist es daher, Verfahren und zugehörige Vorrichtungen anzugeben, mit denen eine Qualitätskontrolle von Faltenbälgen schnell und zerstörungsfrei erfolgen kann.

Gemäß der Erfindung ist die Aufgabe dadurch gelöst, daß die mechanischen Eigenschaften des Faltenbalgmaterials wellenweise erfaßt und ausgewertet werden. Vorzugsweise wird dazu pro Welle ein Zug- und/oder Druckversuch ausgeführt, wobei die Kraft in Abhängigkeit von der Längenänderung erfaßt wird. Damit können die mechanischen Eigenschaften der einzelnen Wellen miteinander verglichen werden, wobei sowohl der mittlere Wert der mechanischen Eigenschaften aller Wellen einerseits als auch die Standardabweichung der einzelnen Wellen vom Mittelwert andererseits als Gütekriterium heranziehbar sind.

Eine Vorrichtung zur Durchführung des erfindungsgemäßen Verfahrens weist im wesentlichen eine Einrichtung zur Durchführung von Druck- und/oder Zugversuchen auf, die im Gegensatz zu üblichen Versuchseinrichtungen zwei gegeneinander relativ verschiebbare Tragringe mit Mitnahmeschiebern zum Eingriff in die einzelnen Wellen eines Faltenbalges aufweist, wobei die Mitnahmeschieber jeweils einen Dehnungsmeßstreifen zum Erfassen von Kräften haben. Vorzugsweise hat jeder Tragring vier Mitnahmeschieber mit jeweils einviertelkreisförmiger Aussparung, so daß eine Welle vollständig umschlossen werden kann. Dabei sind den Mitnahmeschiebern pneumatische und/oder hydraulische Mittel zum Ineingriffbringen in die Wellen zugeordnet.

Es ist somit eine Vorrichtung geschaffen, mit der die einzelnen Wellen eines Faltenbalges automatisiert geprüft werden können. Dabei sind die Meßgrößen unmittelbar als elektrische Größen erfaßbar und auch verarbeitbar, so daß mittels geeigneter Auswerteeinrichtungen die Gütekriterien ermittelt werden können. Vorzugsweise ist dazu ein Mikroprozessor vorhanden.

Die erfindungsgemäße Vorrichtung ist in eine Anlage integrierbar, die eine Zwischenlagereinrichtung für eine größere Zahl von Faltenbälgen aufweist, so daß eine Stückgutprüfung im Durchlauf möglich ist. Damit kann jeder zur Weiterverarbeitung bestimmte Faltenbalg einer schnell durchführbaren Qualitätsprüfung unterzogen werden, wobei bei Nichterfüllen der Qualitätskriterien diesbezügliche Faltenbälge automatisch von einer Weiterverarbeitung aussonderbar sind.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen.

Es zeigen jeweils im schematischer Darstellung
Figur 1 die Wellenstruktur eines Faltenbalges
Figur 2 das Prinzip des erfindungsgemäßen Verfahrens
Figur 3 mittels eines Druck- und Zugversuches ermittelte Kennlinien für eine Welle
Figur 4 die Seitenansicht einer Vorrichtung zur Durchführung von Druck- und Zugversuchen an einzelnen Wellen eines Faltenbalges
Figur 5 einen Tragring mit Mitnahmeschiebern zum Eingriffbringen in eine Welle eines Faltenbalges in der Aufsicht und
Figur 6 einen Schnitt durch Figur 5 längs der Linie VI-VI.

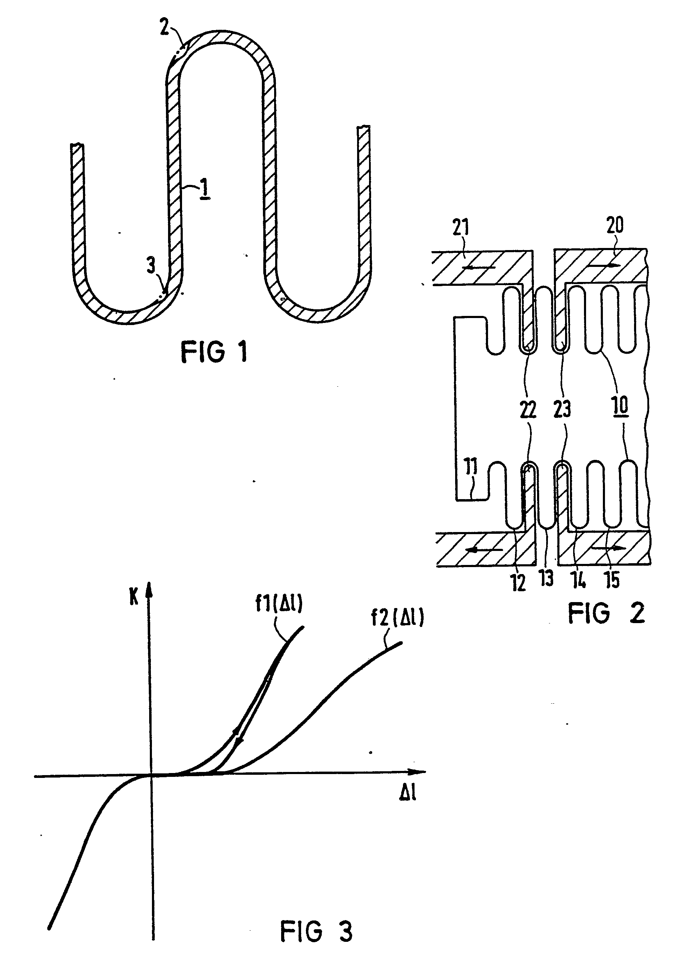

In Figur 1 ist mit 1 ein Ausschnitt eines Faltenbalges bezeichnet. Solche Faltenbälge bestehen üblicherweise aus 10 bis 20 rotationssymmetrischen Wellen, die durch einen Roll- und Drückprozeß aus dünnen V2a-Hohlzylindern hergestellt werden. Die Lebensdauer solcher metallischer Faltenbälge hängt von der Gleichmäßigkeit ihrer Materialdicke innerhalb der einzelnen Wellen ab. Durch das angegebene Herstellverfahren kann aber nicht garantiert werden, daß das ursprünglich eng tolerierte Material seine Dicke beibehält. Es kann in den Biegeradien, insbesondere in den Innenbögen, teilweise unterschiedlich geschwächt sein. Solche Schwächungen sind in der Figur mit 2 und 3 angedeutet.

Bisher wurden solche metallischen Faltenbälge lediglich stichprobenartig Dauerversuchen mit beispielsweise $3 \times 10^5$ Betätigungszyklen Unterzogen, womit im günstigsten Fall die mittlere Qualität eines Fertigungsloses überprüft werden konnte. Exemplarische Fehler, wie sie speziell durch den Roll- und Drückvorgang bei der Herstellung einzelner Faltenbälge auftreten können, waren dabei aber nicht erfaßbar.

In Figur 2 bedeuten 10 ein Faltenbalg mit seinem rundzylindrischen Ansatzstück 11 und mehreren Wellen 12, 13, 14 und 15, die sich bis zum entgegengesetzten rundzylindrischen Ende fortsetzen. Schematisch ist gezeigt, wie mit zwei Rundzylindern 20 und 21 mit entsprechenden Greifringen 22 und 23 konzentrisch in die einzelnen Wellen 12 bis 15 des Faltenbalges 10 eingegriffen werden kann. Damit fixieren die Greifringe 22 und 23 jeweils eine komplette Welle.

Es läßt sich nunmehr ein Kraft-Längenänderungs-Diagramm einer einzelnen Welle aufnehmen. Dazu werden die Teile 20 und 21 mittels geeigneter mechanischer Hilfsmittel auseinander — bzw. gegeneinander bewegt und die sich aufgrund der mechanischen Eigenschaften der Faltenbalgwelle ergebenden Kräfte gemessen. Wenn von jeder Welle ein Kraft-Längenänderungs-Diagramm aufgenommen wird und alle Diagramme abgespeichert und miteinander verglichen werden, lassen sich daraus Aussagen über die Beschaffenheit der einzelnen Wellen des Faltenbalges machen. Insbesondere bei Dünnstellen ist zu erwarten, daß hier ein größerer Hub und damit eine stärkere Dehnung, Streckung und/oder plastische Verformung erzeugt wird als bei den übrigen Wellen. Es lassen sich somit die mit Schwachstellen behafteten Wellen erkennen und anzeigen.

Ein Kraft-Längenänderungs-Diagramm gemäß der Figur 3 zeigt im positiven Quadranten den Zugbereich und dem negativen Quadranten den Druckbereich. In beiden Fällen wird vorwiegend im elastischen Bereich gemessen, um eine irreversible Änderung des Faltenbalges und damit dessen Unbrauchbarkeit auszuschließen. Wenn für alle Wellen derartige Diagramme aufgenommen werden, ergeben sich prinzipiell verschiedene Kenngrößen, die als Qualitätskriterien für den Faltenbalg herangezogen werden könnten : Einerseits gibt die mittlere Steigung aller Faltenbalgwellen eine Aussage über die Steifigkeit und damit das Faltenbalgmaterial. Es hat sich aber gezeigt, daß es nicht allein auf die mittlere Steigung ankommt, sondern auch auf die Gleichmäßigkeit der Steigung aller Wellen, d. h. also die Abweichungen gegenüber dem Mittelwert. Versuche haben bestätigt, daß aus dem Verlauf der Standardabweichungen konkrete Aussagen über die Bruchwahrscheinlichkeit an bestimmten Stellen des Faltenbalges gemacht werden können. Daneben ist aber auch der Verlauf der Hysteresekurve im Zug- und/oder im Druckbereich sowie der Anstieg und Rücklauf im Nullkraftbereich von Aussagekraft.

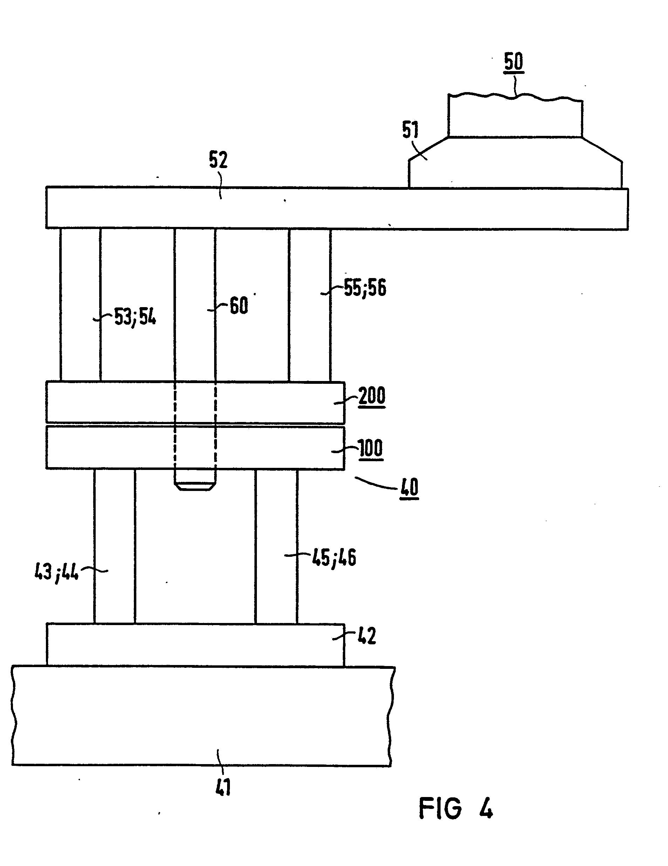

Mit einer Vorrichtung gemäß den Figuren 4 bis 6 ergibt sich nun die Möglichkeit, das oben anhand des Meßprinzips beschriebene neue Verfahren in einer Fertigungslinie, bei der Faltenbälge verarbeitet werden sollen, beispielsweise bei der Herstellung von Vakuumschaltröhren, im Rahmen einer automatisierten Eingangsprüfung zu verwenden. Dafür werden an sich bekannte Versuchseinrichtungen zur Aufnahme von Kraft-Dehnungsdiagrammen entsprechend modifiziert.

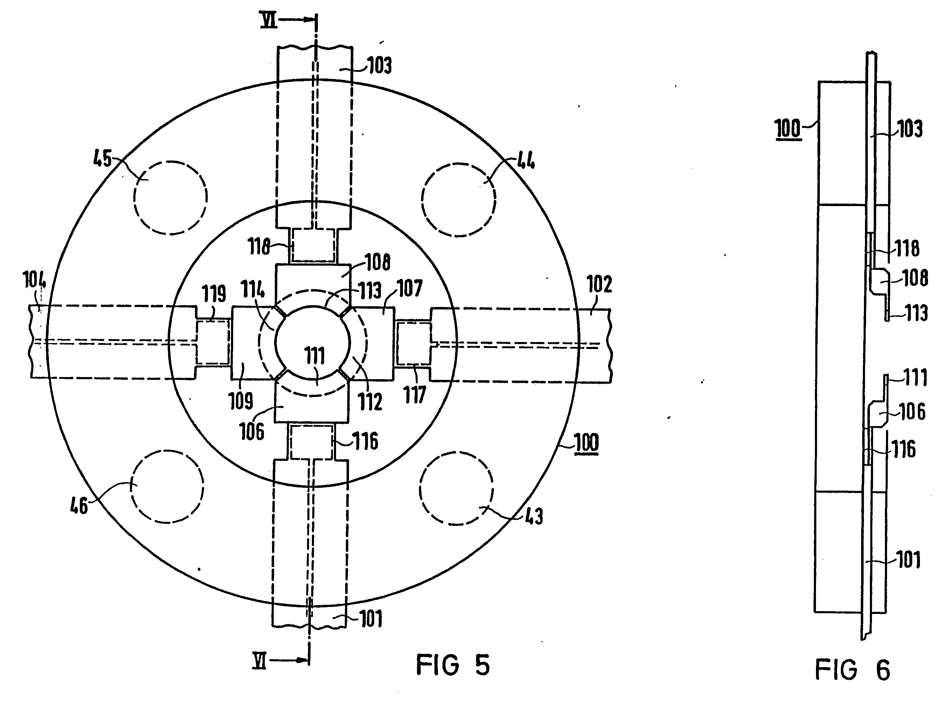

In Figur 4 bedeutet 40 die gesamte Meßeinrichtung, deren unterer Teil im wesentlichen aus einem Versuchstisch 41 mit darauf befindlicher Grundplatte 42 und vier Tragsäulen 43 bis 46 und einem darauf angeordneten Tragring 100 besteht. Die Geometrie dieser Vorrichtung ist im einzelnen aus den Figuren 5 und 6 ersichtlich, die weiter unten noch beschrieben werden. Der obere Teil der Meßeinrichtung besteht aus einer seitlich angelenkten Schubanordnung 50, von der über einen Stempel 51 und einen Ausleger 52 eine Vertikalbewegung auf vier, am Ausleger 52 befindliche Tragsäulen 53 bis 56 übertragen werden kann und an deren unterem Ende ein Tragring 200 angebracht ist. In der Mitte befindet sich eine Aufnahmesäule 60 zum Aufschieben eines zu prüfenden Faltenbalges.

Die beschriebene Vorrichtung dient prinzipiell dazu, eine Meßprobe, die zwischen den Tragringen 100 und 200 eingespannt ist, einer Längenänderung zu unterziehen, wie dies auch beim Stand der Technik üblich ist. Zwecks wellenweiser Prüfung von Faltenbälgen sind nun die Tragringe 100 und 200 entsprechend Figur 5 und Figur 6 ausgebildet. Beide Tragringe 100 und 200 entsprechen sich im wesentlichen, wobei lediglich die Auflage der Tragsäulen 43 bis 46 bzw. 53 bis 56 unterschiedlich ist.

Figur 5 und Figur 6 zeigen im einzelnen den bereits erwähnten Tragring 100 mit den vier im Ansatz angedeuteten Tragsäulen 43 bis 46, welcher vier rechtwinkelig zueinander angeordnete Mitnahmeschieber 101 bis 104 aufweist. Die Mitnahmeschieber 101 bis 104 sind radial zustellbar und beispielsweise über einen Pneumatikantrieb hin- und herschiebbar. Zum Ringmittelpunkt hin weist jeder Mitnahmeschieber 101 bis 104 ein Formstück 106 bis 109 auf, welches in der Draufsicht zum Tragringmittelpunkt hin jeweils eine viertelkreisförmige Ausformung hat, die in der Schnittdarstellung gemäß Figur 6 als schmale Zunge 111 bis 114 ausgebildet sind. Diese Zungen 111 bis 114 können — wie oben beschrieben — mit den einzelnen Wellen eines Faltenbalges in Eingriff gebracht werden. Es kann also mittels der beiden Tragringe 100 und 200 ein Faltenbalg ringweise fest umschlossen und einer Längenänderung unterzogen werden.

An der Unterseite der Mitnahmeschieber 101 bis 104 sind jeweils vor dem abgekröpften Element 106 bis 109 Dehnungsmeßstreifen 116 bis 119 angebracht. Die bei eingespanntem Faltenbalg und vorgegebener Längenänderung aufgrund der Materialeigenschaften auftretenden Kräfte können somit erfaßt und als elektrisches Signal registriert werden.

Zu der dargestellten Meßeinrichtung gehören weiterhin Steuer- und Auswerteeinheiten, die im einzelnen nicht dargestellt sind. Mit der Steuereinheit kann insbesondere erreicht werden, daß durch abgestimmtes schrittweises Ineingriffbringen der Mitnahmeschieber 101 bis 103 in die einzelnen Wellen eines Faltenbalges letzterer ringweise fortlaufend prüfbar ist. Mittels einer geeigneten Handhabungsvorrichtung für die Faltenbälge können diese auch selbsttätig zugeführt werden, so daß der Einbau der beschriebenen Meßeinrichtung in eine automatisierte Fertigungslinie möglich ist.

Die Auswerteeinheit besteht im wesentlichen aus einem Mikrocomputer mit zugehörigen Speicher- und Registriereinheiten. Bei Vorgabe von geeigneten Auswerteprogrammen ist es möglich, daß Schwachstellen in Faltenbälgen unmittelbar bei der Prüfung erkannt werden, so daß solche Faltenbälge aus der Fertigungslinie herausgenommen werden können.

**Patentansprüche**

1. Verfahren zur Qualitätskontrolle von Faltenbälgen, welche aus einer Vielzahl von einzelnen Wellen und beidseitig je einem zylindrischen, lötbaren Ansatzstück bestehen, dadurch gekennzeichnet, daß die mechanischen Eigenschaften des Faltenbalgmaterials wellenweise erfaßt und ausgewertet werden.

2. Verfahren nach Anspruch 1, dadurch gekennzeichnet, daß pro Welle (12 bis 15) ein Zug- und/oder Druckversuch durchgeführt wird, wobei die Kraft (K) in Abhängigkeit von der Längenänderung ($\Delta 1$) erfaßt wird.

3. Verfahren nach Anspruch 1, dadurch gekennzeichnet, daß die mechanischen Eigenschaften der einzelnen Wellen (12 bis 15) miteinander verglichen werden.

4. Verfahren nach Anspruch 2, dadurch gekennzeichnet, daß Kraft (K) und Längenänderungen ($\Delta 1$) als elektrische Größen erfaßbar und darstellbar sind.

5. Verfahren nach Anspruch 2 und 4, dadurch gekennzeichnet, daß im Kraft-Längenänderungs-Diagramm ($K = f_i(\Delta 1)$) die Steigung, das Ein- und Auslaufen der Kennlinie in den Nullpunkt und-/oder die Hysteresekurve erfaßbar sind.

6. Verfahren nach einem der vorhergehenden Anspruche, dadurch gekennzeichnet, daß die Meßwerte als elektrische Größen einem Rechner zwecks Auswertung nach vorgegebenem Programm zuführbar sind.

7. Verfahren nach Anspruch 5 und 6, dadurch gekennzeichnet, daß der mittlere Wert der Steigung der Kraft-Längenänderungs-Diagramme ($K = f_i(\Delta 1)$ aller Wellen (12 bis 15) einerseits und die Standardabweichung der einzelnen Wellen (12 bis 15) vom Mittelwert andererseits als Gütekrierium herangezogen werden.

8. Vorrichtung zur Durchführung des Verfahrens nach Anspruch 1 oder einem der Ansprüche 2 bis 7, mit einer Meßeinrichtung zur Durchführung von Druck und/oder Zugversuchen, dadurch gekennzeichnet, daß die Meßeinrichtung zwei gegeneinander relativ verschiebbare Tragringe (100, 200) mit Mitnahmeschiebern (101 bis 104) zum Eingriff in die einzelnen Wellen (12 bis 15) eines Faltenbalges (10) aufweist, wobei die Mitnähmeschieber (101 bis 104) jeweils einen Dehnungsmeßstreifen (116 bis 119) zur Erfassung von Kräften aufweisen.

9. Vorrichtung nach Anspruch 8, dadurch gekennzeichnet, daß jeder Tragring (100, 200) vier Mitnahmeschieber (101 bis 104) mit je einviertelkreisförmiger Aussparung (111 bis 114) aufweist.

10. Vorrichtung nach Anspruch 8, dadurch gekennzeichnet, daß der eine Tragring (100) starr auf einer Plattform (41) der Meßeinrichtung (40) angeordnet ist und der andere Tragring (200) demgegenüber höhenverstellbar ist.

11. Vorrichtung nach Anspruch 8, dadurch gekennzeichnet, daß den Mitnahmeschiebern (101 bis 104) pneumatische und/oder hydraulische Mittel zwecks Ineingriffbringen in die Wellen (12 bis 15) des Faltenbalges (10) zugeordnet sind.

12. Vorrichtung nach Anspruch 8, dadurch gekennzeichnet, daß der Faltenbalg (10) durch wechselweises Ineingriffbringen der Mitnahmeschieber (101 bis 104) in die Wellen (12 bis 15) des Faltenbalges (10) wellenweise prüfbar ist.

13. Vorrichtung nach Anspruch 8, dadurch gekennzeichnet, daß ein eine Zwischenlagereinrichtung für Faltenbälge (10) vorhanden ist, von der Faltenbälge (10) nacheinander der Meßeinrichtung (40) zuführbar sind, so daß eine automatisierte Stückprüfung durchführbar ist.

14. Vorrichtung nach Anspruch 8, dadurch gekennzeichnet, daß der Meßeinrichtung (40) eine Auswerteeinheit mit Mikroprozessor zur Berechnung der Kraft-Längenänderungs-Diagramme ($K = f_i(\Delta 1)$) der einzelnen Wellen (12 bis 15) eines Faltenbalges (10), deren Mittelwertbildung und Abweichung der Einzelwerte vom Mittelwert vorhanden ist.

**Claims**

1. A method of quality control for bellows which consist of a number of individual corrugations and a cylindrical, solderable connecting piece at each end, characterised in that the mechanical characteristics of the bellows material are determined and evaluated corrugation by corrugation.

2. A method as claimed in claim 1, characterised in that a compression and/or tension test is carried out per corrugation (12 to 15), whereby the force (K) is determined as a function of the change in length ($\Delta 1$).

3. A method as claimed in claim 1, characterised in that the mechanical characteristics of the individual corrugations (12 to 15) are compared with each other.

4. A method as claimed in claim 2, characterised in that force (K) and changes in length ($\Delta 1$) can be determined and represented as electrical values.

5. A method as claimed in claims 2 and 4, characterised in that in the force/change in length diagram ($K = f_i(\Delta 1)$), the gradient, the approach and departure of the characteristic curve towards the zero point and/or the hysteresis curve can be determined.

6. A method as claimed in one of the preceding claims, characterised in that the measured values can be entered in a computer as electrical quantities for the purpose of evaluation according to a given programme.

7. A method as claimed in claims 5 and 6, characterised in that the mean value of the gradient of the force/change in length diagrams ($K = f_i(\Delta 1)$) of all corrugations (12 to 15) on the one hand, and the standard deviation of the individual corrugations (12 to 15) from the mean value on the other hand, are drawn up as criteria of control effectiveness.

8. An apparatus for the execution of the method as claimed in claim 1 or one of the claims 2 to 7, having a measuring device for carrying out the compression and and/or tension tests, characterised in that the measuring device has two bearing rings (100, 200) movable in relation to each other, with carrying slides (101 to 104) for locking into individual corrugations (12 to 15) of a bellows, whereby the carrying slides (101 to 104) have, in each case, a strip for measuring expansion (116 to 119), for determining forces.

9. An apparatus as claimed in claim 8, characterised in that each bearing ring (100, 200) has four carrying slides (101 to 104) each having a recess shaped like a quadrant (111 to 114).

10. An apparatus as claimed in claim 8, characterised in that one bearing ring (100) is arranged rigidly on a bearing ring (200) can be adjusted in height relatively thereto.

11. An apparatus as claimed in claim 8, characterised in that pneumatic and/or hydraulic means of engaging the to the carrying slides (101 to 104).

12. An apparatus as claimed in claim 8, characterised in that the bellows (10) can be tested corrugation by corrugation by successively engaging the carrying slides (101 to 104) with the corrugations (12 to 15).

13. An apparatus as claimed in claim 8, characterised in that an intermediate storage device for bellows (10) is provided, from which the bellows can be guided into the measuring device (40), one after the other, so that an automated inspection can be carried out.

14. An apparatus as claimed in claim 8, characterised in that in the measuring device (40), there is an evaluation unit with a microprocessor for calculating the force/change in length diagram ($K = f_i(\Delta 1)$) of the individual corrugations (12 to 15) of one bellows (10), from which are taken the mean value and the deviation from the mean value.

**Revendications**

1. Procédé pour contrôler la qualité de soufflets qui sont constitués par un grand nombre d'ondulations individuelles et de chaque côté par une pièce rapportée cylindrique et susceptible d'être soudée, caractérisé par le fait que l'on saisit et évalue ondulation par ondulation les propriétés mécaniques du matériau constitutif des soufflets.

2. Procédé suivant la revendication 1, caractérisé par le fait que l'on réalise, par soufflet (12 à 15), un essai de traction et/ou de pression, la force (K) étant saisie en fonction de la modification de la longueur (41).

3. Procédé suivant la revendication 1, caractérisé par le fait que les propriétés mécaniques des ondulations individuelles (12 à 15) sont comparées entre elles.

4. Procédé suivant la revendication 2, caractérisé par le fait que la force (K) et la modification de la longueur (Δ1) sont susceptibles d'être saisies et d'être représentées sous la forme d'une grandeur électrique.

5. Procédé suivant la revendication 2 et 4, caractérisé par le fait que dans le diagramme force-modification de la longueur ($K = f_i(\Delta 1)$) on peut saisir la pente, le passage par le point zéro et l'écart par rapport à celui-ci de la courbe caractéristique et/ou de la courbe d'hystérèse.

6. Procédé suivant l'une des revendications précédentes, caractérisé par le fait que les valeurs de mesure sont susceptibles d'être appliquées, sous la forme de grandeurs électriques à une calculatrice en vue de l'évaluation suivant un programme prédéterminé.

7. Procédé suivant la revendication 5 et 6, caractérisé par le fait que la valeur moyenne de la pente des diagrammes force-modification de la longueur ($K = f_i(\Delta 1)$) de toutes les ondulations (12 à 15), d'une part, et, les écarts par rapport au standard des ondulations individuelles (12 à 15) par rapport à la valeur moyenne, d'autre part, sont utilisés comme critère de qualité.

8. Dispositif pour la mise en oeuvre du procédé suivant la revendication 1 ou suivant l'une des revendications 2 à 7, comportant un dispositif de mesure pour la réalisation des essais en pression et/ou en traction, caractérisé par le fait que le dispositif de mesure comporte deux bagues de support (100, 200) qui sont susceptibles d'être déplacées relativement l'une par rapport à l'autre, avec des coulisseaux d'entraînement (101 à 104) pour pénétrer dans les différentes ondulations (12 à 15) d'un soufflet (10), chaque coulisseau d'entraînement (101 à 104) comportant une jauge extensiométrique (116 à 119) pour la saisie de forces.

9. Dispositif suivant la revendication 8, caractérisé par le fait que chaque bague de support (100, 200) comporte quatre coulisseaux d'entraînement (101 à 104) dont chacun présente une gorge (111 à 114) ayant la forme d'un quart de cercle.

10. Dispositif suivant la revendication 8, caractérisé par le fait qu'une première bague de support (100) est disposée rigidement sur une plateforme (41) du dispositif de mesure (40), alors que l'autre bague de support (200) est susceptible d'être déplacée en hauteur par rapport à ladite première bague de support.

11. Dispositif suivant la revendication 8, caractérisé par le fait qu'aux coulisseaux d'entraînement (101 à 104) sont associés des moyens pneumatiques et/ou hydrauliques en vue de l'insertion dans les ondulations (12 à 15) du soufflet (10).

12. Dispositif suivant la revendication 8, caractérisé par le fait que le soufflet (10) est susceptible d'être contrôler ondulation par ondulation par introduction alternée des coulisseaux d'entraînement (101 à 104) dans les ondulations (12 à 15) du soufflet (10).

13. Dispositif suivant la revendication 8, caractérisé par le fait qu'il est prévu un dispositif de contre-appui pour les soufflets (10), à l'aide duquel les soufflets (10) sont susceptibles d'être amenés successivement au dispositif de mesure (40), en sorte que l'on peut réaliser un contrôle automatisé par pièce.

14. Dispositif suivant la revendication 8, caractérisé par le fait qu'au dispositif de mesure (40) est associée une unité d'évaluation avec microprocesseur pour calculer les diagrammes force-modification de la longueur ($K = f_i(\Delta 1)$) des différentes ondulations (12 à 15) d'un soufflet (10), et pour la formation de la valeur moyenne et l'écart des valeurs individuelles par rapport à la valeur moyenne.

FIG 1

FIG 2

FIG 3

FIG 4

FIG 6

FIG 5

3